(19) **Europäisches Patentamt / European Patent Office / Office européen des brevets**

(11) **EP 3 319 289 A1**

(12) **EUROPEAN PATENT APPLICATION**

(43) Date of publication:
**09.05.2018 Bulletin 2018/19**

(21) Application number: **16306445.4**

(22) Date of filing: **04.11.2016**

(51) Int Cl.:
*H04L 29/06* $^{(2006.01)}$ *H04W 12/04* $^{(2009.01)}$
*H04W 12/06* $^{(2009.01)}$ *G06F 21/31* $^{(2013.01)}$
*H04L 9/14* $^{(2006.01)}$ *H04L 9/32* $^{(2006.01)}$
*H04L 9/08* $^{(2006.01)}$

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **LE SCOUARNEC, Nicolas**
  **35576 Cesson Sévigné (FR)**
• **NEUMANN, Christoph**
  **35576 Cesson Sévigné (FR)**
• **HEEN, Olivier**
  **35576 Cesson Sévigné (FR)**

(74) Representative: **Ståhl, Björn Niclas**
**TECHNICOLOR**
**1-5, rue Jeanne d'Arc**
**92130 Issy-les-Moulineaux (FR)**

(54) **DEVICES AND METHODS FOR CLIENT DEVICE AUTHENTICATION**

(57) A device (220, 230) receives from a client device (210), through an interface (223), a message (316, 408) generated using a cryptographic function and at least one of a client passphrase input by a user and a client first cryptographic key, the client first cryptographic key generated from at least the client passphrase or from a client second cryptographic key input by the user. At least one hardware processor (221) generates a set of values, each value generated using a different passphrase in the set of passphrases in memory (222) or using a different second cryptographic key in the set of second cryptographic keys in the memory (222), the set of passphrases comprising a correct passphrase and one or more variant passphrases generated from the correct passphrase, the set of second cryptographic keys comprising a correct second cryptographic key and one or more variant second cryptographic keys generated from the correct second cryptographic key. The at least one hardware processor determines that the input passphrase corresponds to a passphrase in the set of passphrases in case a value matches the message. This way, a Wi-Fi access point can authenticate a user device on which the user mistyped the passphrase, provided that the mistyped passphrase is part of the set of passphrases.

Figure 3

## Description

TECHNICAL FIELD

The present disclosure relates generally to network security and in particular to client device authentication in networks.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In wireless communications, it is often desirable to restrict access to a so-called access point to authorized client devices only. Wi-Fi, the most widespread wireless networking technology, will be used herein as a non-limitative illustrative example.

A first solution for authenticating client devices is through the use of certificates, but as these require complex installation and management, the solution is not suitable in many cases.

A second solution uses a shared secret that a user inputs on a client device, which then proves knowledge of the shared secret to the access point.

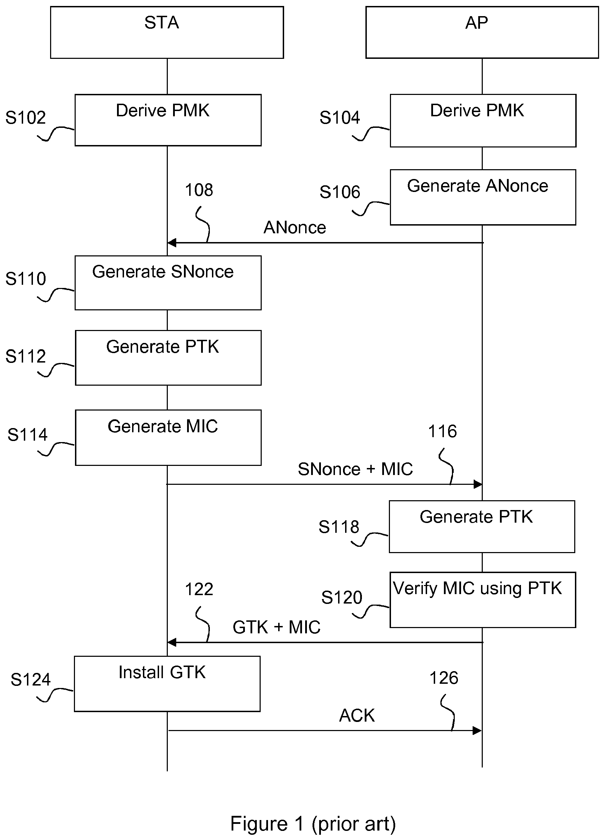

The second solution is widely used in for example Wi-Fi Protected Access (WPA) Personal (also known as WPA-PSK (Pre-Shared Key)), having a second version called WPA2 Personal, described in the standard IEEE 802.11 and illustrated in Figure 1.

In steps S102 and S104, the client device STA and the access point AP independently of each other derive a Pairwise Master Key (PMK) using a key derivation function called Password-Based Key Derivation Function 2 (PBKDF2) taking as input a shared passphrase, a network identifier called Service Set Identifier (SSID) and the length of the SSID. Alternatively, the PMK can be entered as a string of 64 hexadecimal digits.

In step S106, the AP generates a random number (i.e., a nonce) ANonce that it sends in a message 108 to the STA.

STA generates a random number (i.e., a nonce) SNonce, in step S110, and generates, in step S112, a Pairwise Transient Key (PTK) from the nonces, the PMK and the Media Access Control (MAC) addresses of the client device STA and the access point AP. STA then generates, in step S114, a Message Integrity Code (MIC) for SNonce; the MIC is the keyed cryptographic hash (HMAC-SHA1 or AES-CMAC) of the SNonce. The MIC uses the 128-bit PTK as key. STA then sends SNonce and the MIC in message 116 to AP.

Upon reception of SNonce and the MIC, the AP derives, in step S118, the PTK in the same way as STA did in step S112. In step S120, the AP verifies that the MIC is correct. At this point, STA and AP are authenticated and have mutually derived the same PTK.

The AP sends to STA message 122 comprising a Group Temporal Key (GTK) and a sequence number protected using a second MIC (encrypted using bits 128-256 of PTK). Upon reception of message 122, STA installs, in step S124, the GTK, which then can be used to send packets to the wireless network managed by the AP. Finally, STA sends an acknowledgement 126 to the AP.

Another possibility is WPA-Enterprise that works in a different way in order to offer Extensible Authentication Protocol (EAP). Among the many EAP protocols, the most common are Protected Extensible Authentication Protocol (PEAP), Transport Layer Security (TLS) and Tunnelled Transport Layer Security (TTLS). Among these, TLS requires certificates on both the client and the server, while TTLS and PEAP are quite similar in that they both have a certificate on the server and a password input by the client.

As an example, PEAP uses Microsoft's Challenge Handshake Authentication Protocol, version 2 (MS-CHAP v2) to exchange the password as follows. The client and an authenticator (RADIUS server) establish a tunnel through the AP. The authenticator sends a Session ID and a first challenge to the client, which replies with a user name, a second challenge and a hash of the challenges, the Session ID and the MD4 hash of the user's password. The RADIUS server checks the hash and responds with success or failure as appropriate, and informs the AP to accept the client, which causes the AP to initiate a 4-way handshake with the client to adopt a shared key.

A problem with shared secrets and passwords is that inputting them is a task that is prone to error, in particular when the data to input is long or complicated, as is often the case for Wi-Fi in order to provide an acceptable level of security. In an attempt to mitigate this problem, it has been proposed to use Wi-Fi Protected Setup (WPS). However, many devices, such as iOS devices, do not support WPS and some implementations of WPS have been plagued by security issues, thus limiting their use.

In "pASSWORD tYPOS and How to Correct Them Securely," Chatterjee et al. propose authentication methods that are tolerant to typos in passwords. While the paper provides some formal evaluation, but proposes only theoretical solutions without providing any implementations or how to integrate such an approach in an authentication protocol that already exists.

Other typo-tolerant solutions have been described in for example EP 2947591, EP 2876569, EP 3067811, US 2015/0363588 and US 2015/0363593 that all necessitate modification of the client device, and US 9280657 in which the server learns to accept input, faulty passwords followed by a correct password. As such, these conventional solutions have drawbacks.

It will be appreciated that it is desired to have a solution that overcomes at least part of the conventional problems related to input of shared secrets in wireless communication networks.

SUMMARY OF DISCLOSURE

In a first aspect, the present principles are directed to a device comprising an interface configured to receive a message from a client device, the message generated using a cryptographic function and at least one of a client passphrase input by a user and a client first cryptographic key, the client first cryptographic key generated from at least the client passphrase or from a client second cryptographic key input by the user The device further comprises memory configured to store a set of passphrases comprising a first passphrase and one or more variant passphrases generated from the first passphrase or a set of second cryptographic keys comprising a first second cryptographic key and one or more variant second cryptographic keys generated from the first second cryptographic key and at least one hardware processor configured to generate a set of values, each value generated using a different passphrase in the set of passphrases in the memory or using a different second cryptographic key in the set of second cryptographic keys in the memory, and determine that the input passphrase corresponds to a passphrase in the set of passphrases in case a value matches the message.

Various embodiments of the first aspect include:

- That the message comprises a nonce and a first hash value generated from at least the nonce using a keyed cryptographic hash function with the first encryption key as key, wherein a value is a first cryptographic key that matches the message in case a second hash value generated from at least the nonce by the hardware processor using the keyed cryptographic hash function and the first cryptographic key is identical to the first hash value.

- That the device is a Wi-Fi access point, the client first cryptographic key is a Pairwise Transient Key (PTK) generated by the client device and the client second cryptographic key is a Pairwise Master Key (PMK) received by the client device or generated by the client device from at least the client passphrase, wherein the message comprises a random number (SNonce) and a Message Integrity Code (MIC) computed over the random number and encrypted using the PTK, and wherein each value is a PTK, the at least one hardware processor further configured to generate each PTK from a PMK in a set of PMKs, the set of PMKs stored in the memory or generated from one of the passphrases stored in the memory. The at least one hardware processor can be further configured to store the PMK from which was generated the PTK that matched the message and the at least one hardware processor can be further configured to link the PMK that is stored with a MAC address of the client device.
  The at least one hardware processor can also be further configured to generate a Group Temporal Key (GTK) and a sequence number, to generate, using the PTK that checks the message, a second MIC for the sequence number and to send the GTK, the sequence number and the second MIC to the client device.

- That the message comprises a first hash value generated using a cryptographic hash function from data comprising the passphrase; and wherein a value matches the message in case a second hash value generated by the hardware processor using the cryptographic hash function from the data comprising the passphrase is identical to the first hash value. The device can be a password-based WPA2 Enterprise (PEAP/EAP-TTLS) authenticator device, the passphrase a user password, the message comprising a user name, a first challenge and a hash from the first challenge, a second challenge, a session ID and the user password; the at least one hardware processor is further configured to store the user password that matched the message with a MAC address of the client device.

In a second aspect, the present present principles are directed to a method comprising, at a device, receiving, by an interface, a message from a client device, the message generated using a cryptographic function and at least one of a client passphrase input by a user and a client first cryptographic key, the client first cryptographic key generated from at least the client passphrase or from a client second cryptographic key input by the user, generating, by at least one hardware processor, a set of values, each value generated using a different passphrase in a set of passphrases in the memory or using a different second cryptographic key in a set of second cryptographic keys in the memory, the set of passphrases comprising a first passphrase and one or more variant passphrases generated from the first passphrase, the set of second cryptographic keys comprising a first second cryptographic key and one or more variant second cryptographic keys generated from the first second cryptographic key, and determining, by the at least one hardware processor, that the input passphrase corresponds to a passphrase in the set of passphrases in case a value matches the message.

Various embodiments of the first aspect include:

- That the message comprises a nonce and a first hash value generated from at least the nonce using a keyed cryptographic hash function with the first encryption key as key, wherein a value is a first cryptographic key that matches the message in case a second hash value generated from at least the nonce by the hardware processor using the keyed cryptographic hash function and the first cryptographic key is identical to the first hash value. The device can be a Wi-Fi access point, the client first cryptographic key a Pairwise Transient Key (PTK) generated by the client device and the client second cryptographic key a Pairwise Master Key (PMK) received by the client device or generated by the client device from at least the client passphrase, and the message can comprise a random number (SNonce) and a Message Integrity Code (MIC) computed over the random number and encrypted using the PTK, wherein each value is a PTK, and the at least one hardware processor generates each PTK from a PMK in a set of PMKs, the set of PMKs stored in the memory or generated from one of the passphrases stored in the memory.

- That the message comprises a first hash value generated using a cryptographic hash function from data comprising the passphrase and that the hardware processor generates, using the cryptographic hash function, a second hash value from the data comprising the passphrase is identical to the first hash value and that a value matches the message in case a second hash value is identical to the first hash value.

In a third aspect, the present principles are directed to a computer program comprising program code instructions executable by a processor for implementing the steps of a method according to any embodiment of the second aspect.

In a fourth aspect, the present principles are directed to a computer program product which is stored on a non-transitory computer readable medium and comprises program code instructions executable by a processor for implementing the steps of a method according to any embodiment of the second aspect.

BRIEF DESCRIPTION OF DRAWINGS

Preferred features of the present principles will now be described, by way of non-limiting example, with reference to the accompanying drawings, in which:

    Figure 1 illustrates a conventional Wi-Fi Protected Access (WPA) Personal protocol;
    Figure 2 illustrates an exemplary system according to a first embodiment of the present principles;
    Figure 3 illustrates an exemplary method for device insertion according to an embodiment of the present principles; and
    Figure 4 illustrates an exemplary method for device insertion according to a further embodiment of the present principles.

DESCRIPTION OF EMBODIMENTS

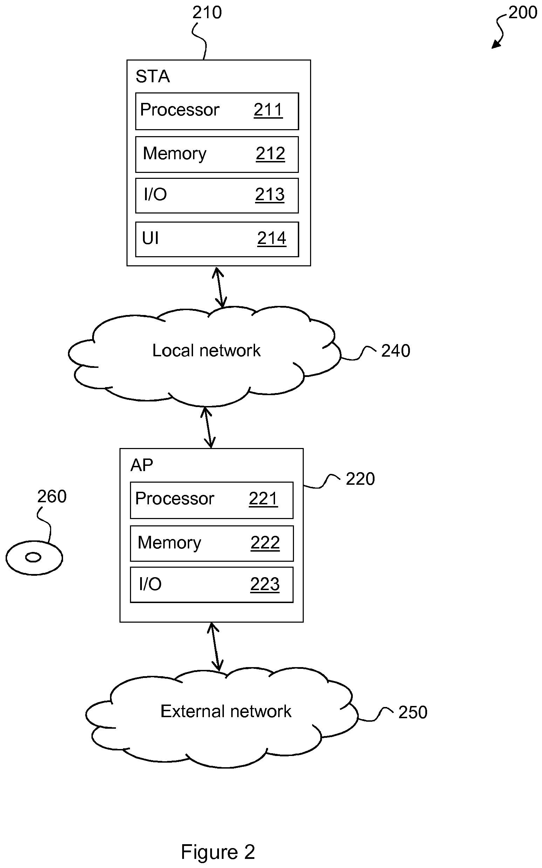

Figure 2 illustrates an exemplary system 200 according to a first embodiment of the present principles. The system 200 comprises a client device (STA) 210, and an access point (AP) 220 such as a gateway. The access point 220 is configured to interface to a local network 240 and an external network 250, such as the Internet, through which connections can be made to devices in another network (not shown). In the exemplary system, the local network 240 is a Wi-Fi network.

The client device 210 and the access point 220 each includes at least one hardware processing unit ("processor") 211, 221, memory 212, 222 and at least one communications interface 213, 223, in the example a Wi-Fi interface, configured to communicate with other devices. The skilled person will appreciate that the illustrated devices are very simplified for reasons of clarity and that real devices in addition would include features such as internal connections and power supplies. Non-transitory storage media 260 stores instructions that, when executed by a processor, perform the functions of the access point 220 as further described hereinafter.

The client device 210, possibly connected to the local network 240, further includes a user interface 214. The client device can for example be a laptop, a smartphone or a tablet.

The access point 220 is configured to perform conventional access point functions such as interfacing the local network 240 and the external network 250. A plurality of client devices may be connected to or through the local network 240, or one local network as the access point 220 may offer a plurality of local networks, for instance in the form of isolated subnets. Typically, any device that proves knowledge of a shared network secret, such as a network key, is given access to the local network 240.

The external network 250 can be used to connect to servers and other devices, possibly through other access points (not shown).

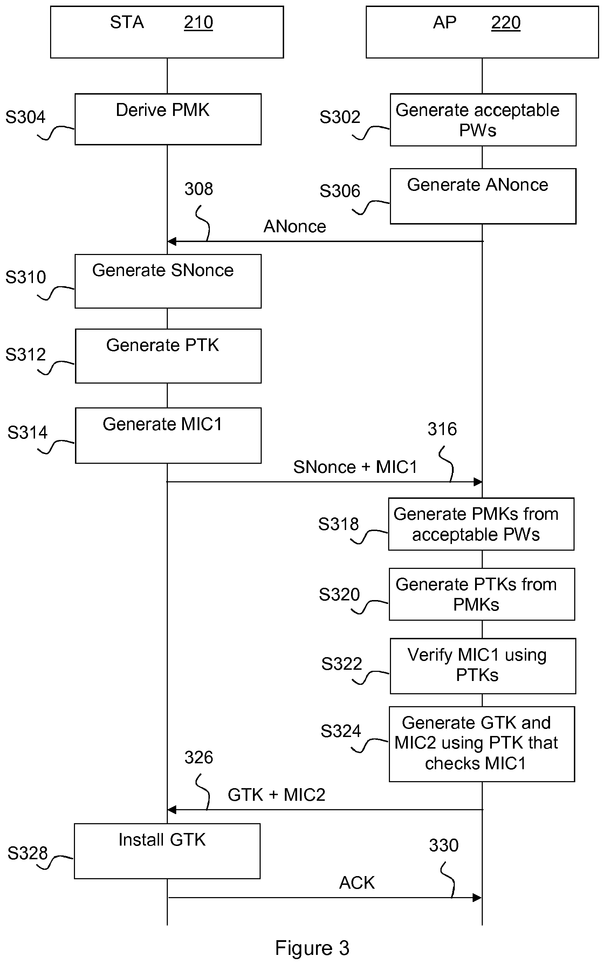

Figure 3 illustrates an exemplary method for device insertion according to an embodiment of the present principles.

In step S302, the processor 221 of the access point ("AP") 220 generates a limited set of faulty but acceptable passphrases from a given passphrase set in the configuration of the access point 220, the set including the given passphrase. In other words, the processor 221 generates and stores a set of passphrases including the original, correct, passphrase and a number of variant passphrases including at least one error. It is preferred that the errors that are introduced correspond to common errors, such as for example (with the number of variants including the original passphrase for a 32-character passphrase within parenthesis):

- omitting a character at any random position (33);
- inverting capitalization (2);

- adding a space every 4 characters (9);
- replacing I (capitalized i) with l (lower case L) (2);
- replacing 0 (zero) by O (2);
- replacing one character (any one) with one of the 4 closest (4*32+1=129);
- replacing one or two characters (any two) with one of the 4 closest

$$\left(\binom{32}{2} * 4 + 32 * 4 + 1 = 2113\right)$$

- any combination of those (the product of the number of variants, 5020488). Note that even when accepting any combination of such errors, it removes at most 23 bits of entropy. If the character are hexadecimals number (0-9A-F) which is common in factory set passphrases, the original entropy is 32*4 = 128 bits. Accepting all these errors leaves (at least) 105 bits of entropy which is still sufficient in many cases.

A salient difference from the conventional protocol described in Figure 1, the access point 220 does not necessarily derive the PMK at the beginning, but can wait until it receives SNonce + MIC from the client device ("STA") 210. It is noted that the protocol remains unchanged for the client device 210.

In step S304, the client device 210 derives the Pairwise Master Key (PMK) using the key derivation function (in the example, PBKDF2) taking as input an input passphrase (which may be incorrect), a network identifier called Service Set Identifier (SSID) and the length of the SSID. Alternatively, the PMK can be entered as a string of 64 hexadecimal digits (which also may be incorrect).

In step S306, the access point 220 generates a random number ANonce that it sends in a message 308 to the client device 210.

The client device 210 generates another random number SNonce, in step S310, and generates, in step S312, a Pairwise Transient Key (PTK) from the nonces, the PMK and the Media Access Control (MAC) addresses of the client device 210 and the access point 220. The client device 210 then generates, in step S314, a Message Integrity Code (MIC) - MIC1 in Figure 3 - for SNonce; MIC1 is the keyed cryptographic hash (HMAC-SHA1 or AES-CMAC) of the SNonce. A MIC uses the 128bits PTK as key. The client device 210 then sends SNonce and MIC1 in message 316 to the access point 220.

Upon reception of SNonce and MIC1, the access point 220 derives, in step S318, a PMK from each passphrase in the set of acceptable passphrases. The generated PMKs can be stored instead of, or in addition to, the set of acceptable passphrases. Alternatively, in case the PMK is input as a string of 64 hexadecimal digits, the access points 220 derives and stores acceptable PMKs from the correct PMK. It is noted that this step can be performed beforehand, for example just after step S302.

In step S320, the access point 220 generates a PTK for each PMK generated in step S318, using the same generation method as the client device 210 did in step S312.

In step S322, the access point 220 verifies that MIC1 is correct for any PTK generated in step S320. If a PTK enables verification of MIC1, then this PTK is set as the current PTK. At this point, access point 220 and the client device 210 are authenticated and have mutually derived the same PTK (possibly from an incorrect but acceptable passphrase). It is noted that if no PTK enables verification of the MIC, then the client device 210 is not authenticated, just as if an incorrect passphrase was input in the conventional method illustrated in Figure 1.

The access point 220 generates, in step S324, a Group Temporal Key (GTK) and a sequence number protected using a second MIC (encrypted using bits 128-256 of PTK) - MIC2 in Figure 3 - that are sent in to the client device 210 in message 326. Upon reception of the message 324, the client device 210 installs, in step S328, the GTK, which then can be used to send packets to the wireless network managed by the access point 220. Finally, client device 210 sends an acknowledgement 330 to the access point 220.

As can be seen, the access point 220 tries to find the passphrase in the set of acceptable passphrases under which the received MIC, MIC1, is valid. If such a passphrase is found, then the client can be authenticated, and the passphrase is used as the basis for the rest of the exchange (i.e., deriving the PTK, ciphering the GTK and signing the messages).

The access point preferably stores the PMK used by a given client device (identified by its MAC address). In other words, the access point stores the PMK from which was generated the PTK that enabled verification of the MIC. This way, the next time the client device connects, the access point can retrieve the stored PMK, which can reduce the number of guessed passphrases at reconnections.

The present principles extend to the case of password-based WPA2 Enterprise (PEAP/EAP-TTLS). As for Wi-Fi, the correct password and its accepted variants are tried to determine if the authentication is a success or not.

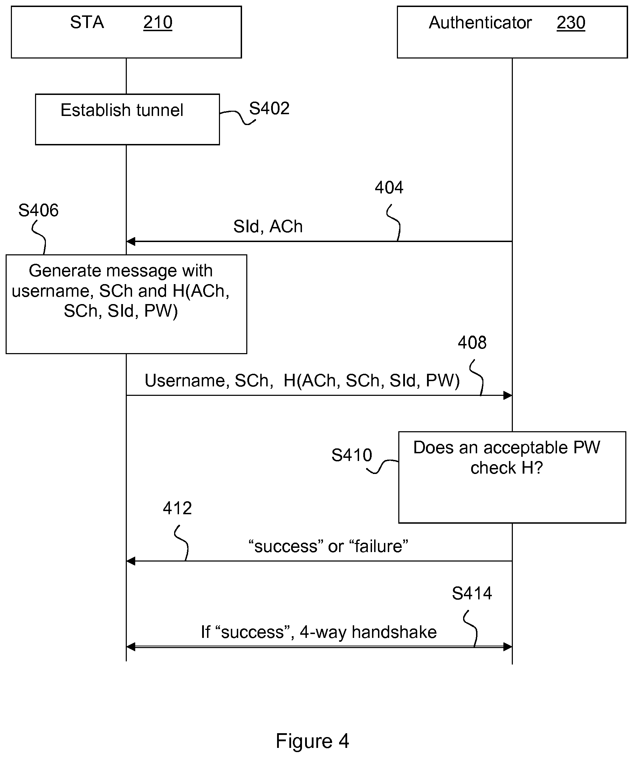

Figure 4 illustrates an exemplary method for device insertion according to a further embodiment of the present principles.

Figure 4 illustrates a client device 210 that can be identical to the client device in Figure 2. The Figure also shows an authenticator 230 that, although not illustrated for reasons of succinctness, includes at least one hardware processing unit ("processor"), memory and at least one communications interface configured to communicate with other devices.

In step S402, the client device 210 establishes, through an access point (220 in Figure 2), a Transport Level Security (TLS) tunnel with the authenticator device 230, such as a RADIUS server. The authenticator 230 sends, in message 404, a Session ID (SId) and a Challenge (ACh) to the client device 210. The client device 210 generates, in step S406, a message 408 with a Username, a Challenge (SCh) and a MD4 hash of the challenges (Ach, SCh), the SessionID (SId) and the user password. The message 408 is sent to the authenticator 230. So far, the method corresponds to the conventional method.

In step S410, the authenticator 230 checks, if any user password in a set of acceptable user passwords for the user checks the hash H; in other words, if a calculated MD4 hash of the challenges (Ach, SCh), the SessionID (SId) and a user password in the set of acceptable user passwords is identical with the hash H received in message 408.

The authenticator 230 then sends a message 412 to the client device 210. If no password in the set checks the hash H, then the message 412 indicates failure, the client device 210 is not authenticated and the method ends. However, if a password does check the hash H, then the message 412 indicates success and the client device 210 is authenticated. The client device 210 and the authenticator then initiate, in step S414, a conventional 4-way handshake to adopt a key.

The authenticator preferably stores the PW used by a given client device (identified by its MAC address). In other words, the authenticator stores the PW from which was generated the hash that enabled verification of the received hash. This way, the next time the client device connects, the access point can retrieve the stored PW, which can reduce the number of guessed passphrases at reconnections.

As will be appreciated, the present principles work with existing clients and only requires modification at, depending on the embodiment, access points or RADIUS servers. Further, as the original passphrase or password is part of the set, the methods are backward compatible.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A device (220, 230) comprising:

an interface (223) configured to receive a message (316, 408) from a client device (210), the message generated using a cryptographic function and at least one of a client passphrase input by a user and a client first cryptographic key, the client first cryptographic key generated from at least the client passphrase or from a client second cryptographic key input by the user;
memory (222) configured to store a set of passphrases comprising a first passphrase and one or more variant passphrases generated from the first passphrase or a set of second cryptographic keys comprising a first second cryptographic key and one or more variant second cryptographic keys generated from the first second cryptographic key; and
at least one hardware processor (221) configured to:

> generate a set of values, each value generated using a different passphrase in the set of passphrases in the memory (222) or using a different second cryptographic key in the set of second cryptographic keys in the memory (222); and
> determine that the input passphrase corresponds to a passphrase in the set of passphrases in case a value matches the message.

2. The device (220) of claim 1, wherein the message comprises a nonce and a first hash value generated from at least the nonce using a keyed cryptographic hash function with the first encryption key as key; and wherein a value is a first cryptographic key that matches the message in case a second hash value generated from at least the nonce by the hardware processor using the keyed cryptographic hash function and the first cryptographic key is identical to the first hash value.

3. The device (220) of claim 2, wherein the device is a Wi-Fi access point (220), the client first cryptographic key is a Pairwise Transient Key (PTK) generated by the client device and the client second cryptographic key is a Pairwise Master Key (PMK) received by the client device or generated by the client device from at least the client passphrase;
wherein the message comprises a random number (SNonce) and a Message Integrity Code (MIC) computed over the random number and encrypted using the PTK; and
wherein each value is a PTK, the at least one hardware processor (221) further configured to generate each PTK from a PMK in a set of PMKs, the set of PMKs stored in the memory (222) or generated from one of the passphrases stored in the memory (222).

4. The device of claim 3, wherein the at least one hardware processor (221) is further configured to store the PMK from which was generated the PTK that matched the message.

5. The device of claim 4, wherein the at least one hardware processor (221) is further configured to link the PMK that is stored with a MAC address of the client device.

6. The device of claim 3, wherein the at least one hardware processor (221) is further configured to generate a Group Temporal Key (GTK) and a sequence number, to generate, using the PTK that checks the message, a second MIC for the sequence number and to send the GTK, the sequence number and the second MIC to the client device (210).

7. The device (230) of claim 1, wherein the message comprises a first hash value generated using a cryptographic hash function from data comprising the passphrase; and wherein a value matches the message in case a second hash value generated by the hardware processor using the cryptographic hash function from the data comprising the passphrase is identical to the first hash value.

8. The device (230) of claim 7, wherein the device is a password-based WPA2 Enterprise (PEAP/EAP-TTLS) authenticator device, the passphrase is a user password, the message comprises a user name, a first challenge and a hash from the first challenge, a second challenge, a session ID and the user password.

9. The device (230) of claim 8, wherein the at least one hardware processor is further configured to store the user password that matched the message with a MAC address of the client device.

10. A method comprising at a device (220, 230):

> receiving, by an interface (223), a message (316, 408) from a client device (210), the message generated using a cryptographic function and at least one of a client passphrase input by a user and a client first cryptographic key, the client first cryptographic key generated from at least the client passphrase or from a client second cryptographic key input by the user;
> generating (S322), by at least one hardware processor, a set of values, each value generated using a different passphrase in a set of passphrases in the memory (222) or using a different second cryptographic key in a set of second cryptographic keys in the memory (222), the set of passphrases comprising a first passphrase and one or more variant passphrases generated from the first passphrase, the set of second cryptographic keys comprising a first second cryptographic key and one or more variant second cryptographic keys generated from the first second cryptographic key; and

determining (S322), by the at least one hardware processor, that the input passphrase corresponds to a passphrase in the set of passphrases in case a value matches the message.

11. The method of claim 10, wherein the message comprises a nonce and a first hash value generated from at least the nonce using a keyed cryptographic hash function with the first encryption key as key; and wherein a value is a first cryptographic key that matches the message in case a second hash value generated from at least the nonce by the hardware processor using the keyed cryptographic hash function and the first cryptographic key is identical to the first hash value.

12. The method of claim 11, wherein the device is a Wi-Fi access point (220), the client first cryptographic key is a Pairwise Transient Key (PTK) generated by the client device and the client second cryptographic key is a Pairwise Master Key (PMK) received by the client device or generated by the client device from at least the client passphrase;

wherein the message comprises a random number (SNonce) and a Message Integrity Code (MIC) computed over the random number and encrypted using the PTK; and

wherein each value is a PTK, and

wherein the method further comprises generating, by the at least one hardware processor (221), each PTK from a PMK in a set of PMKs, the set of PMKs stored in the memory (222) or generated from one of the passphrases stored in the memory (222).

13. The method of claim 10, wherein the message comprises a first hash value generated using a cryptographic hash function from data comprising the passphrase; wherein the method further comprises generating, by the hardware processor using the cryptographic hash function, a second hash value from the data comprising the passphrase is identical to the first hash value; and wherein a value matches the message in case a second hash value is identical to the first hash value.

14. Computer program comprising program code instructions executable by a processor for implementing the steps of a method according to at least one of claims 10 and 13.

15. Computer program product which is stored on a non-transitory computer readable medium and comprises program code instructions executable by a processor for implementing the steps of a method according to at least one of claims 10 and 13.

STA

AP

S102 — Derive PMK

S104 — Derive PMK

S106 — Generate ANonce

108

ANonce

S110 — Generate SNonce

S112 — Generate PTK

S114 — Generate MIC

116

SNonce + MIC

S118 — Generate PTK

122

S120 — Verify MIC using PTK

GTK + MIC

S124 — Install GTK

126

ACK

Figure 1 (prior art)

210

200

STA

| Processor | 211 |
| Memory | 212 |
| I/O | 213 |
| UI | 214 |

Local network — 240

260

AP — 220

| Processor | 221 |
| Memory | 222 |
| I/O | 223 |

External network — 250

Figure 2

Figure 3

STA     210

Authenticator     230

Establish tunnel — S402

404

Sld, ACh

S406

Generate message with username, SCh and H(ACh, SCh, Sld, PW)

408

Username, SCh,  H(ACh, SCh, Sld, PW)

S410 — Does an acceptable PW check H?

412

"success" or "failure"

S414

If "success", 4-way handshake

Figure 4

Europäisches
Patentamt

European
Patent Office

Office européen
des brevets

# EUROPEAN SEARCH REPORT

**Application Number**

EP 16 30 6445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/117494 A1 (KAPLAN PHILIPPE [FR] ET AL) 28 April 2016 (2016-04-28)<br>* figure 2 *<br>* paragraph [0026] *<br>* paragraph [0027] *<br>* paragraph [0039] * | 1-15 | INV.<br>H04L29/06<br>H04W12/04<br>H04W12/06<br>G06F21/31<br>H04L9/14<br>H04L9/32<br>H04L9/08 |
| A | "IEEE Standard for Information TechnologyTelecommunications and Information Exchange Between SystemsLocal and Metropolitan Area NetworksSpecific Requirements Part 11: Wireless LAN Medium Access Control (MAC) and Physical Layer (PHY) Specifications Amendment 6: Medium Access Control (MAC) Security Enh", IEEE STANDARD; [IEEE STANDARD], IEEE, PISCATAWAY, NJ, USA, 23 July 2004 (2004-07-23), pages _32-114, XP017603687, ISBN: 978-0-7381-4074-2<br>* Section 8 Security. * | 1-15 | |
| A,D | RAHUL CHATTERJEE ET AL: "pASSWORD tYPOS and How to Correct Them Securely", 2016 IEEE SYMPOSIUM ON SECURITY AND PRIVACY (SP), 16 August 2016 (2016-08-16), pages 799-818, XP055330077, DOI: 10.1109/SP.2016.53 ISBN: 978-1-5090-0824-7<br>* Section V. Typo-tolerant checking schemes * | 1-15 | TECHNICAL FIELDS SEARCHED (IPC)<br>H04L<br>H04W<br>G06F |

-/--

The present search report has been drawn up for all claims

| Place of search | Date of completion of the search | Examiner |
|---|---|---|
| Munich | 3 January 2017 | Caragata, Daniel |

page 1 of 2

Europäisches
Patentamt

European
Patent Office

Office européen
des brevets

## EUROPEAN SEARCH REPORT

Application Number

EP 16 30 6445

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/082817 A1 (TAKAHASHI TOSHINARI [JP] ET AL) 3 April 2008 (2008-04-03) <br> * paragraph [0014] * <br> * paragraph [0015] * <br> * paragraph [0039] * <br> * paragraph [0058] * <br> * paragraph [0060] * <br> * paragraph [0067] * <br> ----- | 1-15 | |
| A | US 2014/068757 A1 (KOMATSU KIYOSHI [JP]) 6 March 2014 (2014-03-06) <br> * paragraph [0009] * <br> ----- | 1-15 | |

TECHNICAL FIELDS
SEARCHED (IPC)

The present search report has been drawn up for all claims

| Place of search | Date of completion of the search | Examiner |
|---|---|---|
| Munich | 3 January 2017 | Caragata, Daniel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 16 30 6445

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2017

| Patent document cited in search report | | Publication date | Patent family member(s) | | Publication date |
|---|---|---|---|---|---|
| US 2016117494 | A1 | 28-04-2016 | GB<br>US | 2531710 A<br>2016117494 A1 | 04-05-2016<br>28-04-2016 |
| US 2008082817 | A1 | 03-04-2008 | JP<br>JP<br>US | 4881119 B2<br>2008090547 A<br>2008082817 A1 | 22-02-2012<br>17-04-2008<br>03-04-2008 |
| US 2014068757 | A1 | 06-03-2014 | JP<br>JP<br>US | 5971038 B2<br>2014049028 A<br>2014068757 A1 | 17-08-2016<br>17-03-2014<br>06-03-2014 |

EPO FORM P0459

For more details about this annex : see Official Journal of the European Patent Office, No. 12/82

**REFERENCES CITED IN THE DESCRIPTION**

**Patent documents cited in the description**

- EP 2947591 A
- EP 2876569 A
- EP 3067811 A
- US 20150363588 A
- US 20150363593 A
- US 9280657 B